# EUROPEAN PATENT APPLICATION

(11) **EP 4 708 071 A1**
(43) Date of publication of application: **11.03.2026**
(21) Application number: 24806357.0
(22) Date of filing: 29.04.2024
(51) Int. Cl.: G06F 16/332

(54) **SESSION INFORMATION PROCESSING METHOD AND APPARATUS, ELECTRONIC DEVICE, AND READABLE STORAGE MEDIUM**

(30) Priority: 15.05.2023 CN 202310540555; 15.05.2023 CN 202310540629
(71) Applicant: Guangdong Midea Kitchen Appliances Manufacturing Co., Ltd., Foshan, Guangdong 528311 (CN)
(72) Inventor: SUN, Yuwen, Foshan, Guangdong 528311 (CN); QIAN, Zhida, Foshan, Guangdong 528311 (CN)
(74) Representative: RGTH
(86) International application number: PCT/CN2024/090601
(87) International publication number: WO 2024/235001

(57) **Abstract**

The present application provides a session information processing method and apparatus, an electronic device, and a readable storage medium. The session information processing method comprises: receiving a first user input for a target recipe interface; in response to the first input, displaying a target interface, content of the target interface being associated with a target recipe; receiving a second user input for the target interface, the second input being used for inputting target session information; and in response to the second input, outputting target response information, wherein the target response information is determined according to the target session information and a first database, and the first database is associated with the target recipe.

## Description

### CROSS-REFERENCE TO RELATED APPLICATIONS

This application claims priority to Chinese Patent Application No. 202310540629.4 filed with the China National Intellectual Property Administration on May 15, 2023 and entitled "SESSION INFORMATION PROCESSING METHOD AND APPARATUS, ELECTRONIC DEVICE, AND READABLE STORAGE MEDIUM", and Chinese Patent Application No. 202310540555.4 filed with the China National Intellectual Property Administration on May 15, 2023 and entitled "SESSION INFORMATION PROCESSING METHOD AND APPARATUS, ELECTRONIC DEVICE, AND READABLE STORAGE MEDIUM", the entire contents of which are incorporated herein by reference.

### FIELD

The present application relates to the technical field of intelligent question answering, and in particular to a session information processing method and apparatus, an electronic device, and a computer-readable storage medium.

### BACKGROUND

With the development of artificial intelligence technology, an intelligent question-answering assistant has been increasingly widely used. Through the intelligent question-answering assistant, various questions raised by users can be solved in real time. However, in the cooking field, as the range of the questions covered by the cooking field is relatively wide and the answers to the same question in different recipes or cooking flows are different, when the intelligent question-answering assistant answers cooking-related questions raised by users, the accuracy of semantic parsing to cooking-related questions is low, and then this results in failure to accurately answer users' questions and lower users' cooking efficiency.

### SUMMARY

The present application aims to solve at least one of the technical problems existing in the prior art or related art.

Thus, the first aspect of the present application provides a session information processing method.

The second aspect of the present application provides a session information processing apparatus.

The third aspect of the present application provides another session information processing method.

The fourth aspect of the present application provides another session information processing apparatus.

The fifth aspect of the present application provides an electronic device.

The sixth aspect of the present application provides a computer-readable storage medium.

According to the first aspect of the present application, a session information processing method is provided, comprising: receiving a first input from user with respect to a target recipe interface; in response to the first input, displaying a target interface, interface content of the target interface being associated with a target recipe; receiving a second input from user with respect to the target interface, the second input being configured to input target session information; and in response to the second input, outputting target response information, wherein the target response information is determined according to the target session information and a first database, and the first database is associated with the target recipe.

In some embodiments, the target response information comprises first answer information, and outputting the target response information comprises: matching the target session information with the first database to obtain a first matching result; outputting the first answer information in the case that the first matching result is a successful match; matching the target session information with a second database to obtain a second matching result in the case that the first matching result is a failed match; outputting the target response information according to the second matching result; wherein the second database is a general database.

In some embodiments, matching the target session information with the first database to obtain a first matching result comprises: determining a target text based on the target session information; matching and comparing the target text with multiple pieces of first information in the first database, wherein the first information is associated with the target recipe; in the case that there is a successful match between the first information and the target text, determining that the first matching result is a successful match; in the case that the target text fails to match any of the first information, determining that the first matching result is a failed match.

In some embodiments, the target response information further comprises second answer information and setting information. Outputting target response information based on the second matching result comprises: outputting the second answer information in the case that the second matching result is a successful match; outputting the setting information in the case that the second matching result is a failed match, wherein the setting information indicates that the target session information does not have answer information.

In some embodiments, after outputting the target response information, the session information processing method further comprises: acquiring feedback information from the user on the target response information; and updating the database information of the first database according to the feedback information.

According to the second aspect of the present application, a session information processing apparatus is provided, comprising: a receiving unit configured to receive a first input from user with respect to a target recipe interface; a display unit configured to display a target interface in response to the first input, wherein the interface content of the target interface is associated with a target recipe; the receiving unit is further configured to receive a second input from user with respect to the target interface, and the second input is configured to input target session information; a processing unit configured to output target response information in response to the second input; wherein the target response information is determined based on the target session information and a first database, and the first database is associated with the target recipe.

In some embodiments, the target response information comprises the first answer information, and the processing unit is configured to: match the target session information with the first database to obtain a first matching result; output the first answer information in the case that the first matching result is a successful match; match the target session information with a second database to obtain a second matching result in the case that the first matching result is a failed match; and output target response information according to the second matching result; wherein the second database is a general database.

In some embodiments, the processing unit is configured to: determine a target text based on the target session information; match and compare the target text with multiple pieces of first information in the first database, wherein the first information is associated with the target recipe; determine that the first matching result is a successful match in the case that there is a successful match between the first information and the target text; and determine that the first matching result is a failed match in the case that the target text fails to match any of the first information.

In some embodiments, the target response information further comprises second answer information and setting information. The processing unit is configured to: output the second answer information in the case that the second matching result is a successful match; output the setting information in the case that the second matching result is a failed match, wherein the setting information indicates that the target session information does not have the answer information.

In some embodiments, the session information processing apparatus further comprises: an acquiring unit configured to acquire feedback information from the user on the target response information; and the processing unit is further configured to update the database information of the first database according to the feedback information.

According to the third aspect of the present application, another session information processing method is provided, comprising: receiving a first input from user with respect to a first interface, wherein the first interface is an application interface of a first application and the first input is configured to input first session information; displaying target content in response to the first input; wherein the target content is first answer information or a second interface, the first answer information corresponds to the first session information and the second interface is an application interface of a second application associated with the first session information.

In some embodiments, displaying the target content comprises: determining a target text based on the first session information; parsing the target text and determining target intention according to a parsing result; displaying the target content based on the target intention.

In some embodiments, displaying the target content based on the target intention comprises: matching the target intention with a first database, wherein the first database corresponds to the first application; displaying the target content according to a matching result.

In some embodiments, displaying the target content according to the matching result comprises: displaying first answer information in the case that the target intention is successfully matched with the first database; displaying the second interface in the case that the target intention fails to match the first database.

In some embodiments, after displaying the target content, the session information processing method further comprises: displaying target information in the second interface, wherein the target information is associated with the first session information; and/or displaying second answer information in response to a second input from user with respect to the second interface, wherein, the second input is configured to input second session information, the second answer information is determined based on a second database and the second session information, and the second database corresponds to the second application.

According to the fourth aspect of the present application, another session information processing apparatus is provided, comprising: a receiving unit configured to receive a first input from user with respect to a first interface, wherein the first interface is an application interface of a first application and the first input is configured to input first session information; a display unit configured to display target content in response to the first input; wherein the target content is first answer information or a second interface, the first answer information corresponds to the first session information and the second interface is an application interface of a second application associated with the first session information.

In some embodiments, the session information processing apparatus further comprises: a processing unit configured to determine a target text based on the first session information, parse the target text, and determine the target intention according to a parsing result; the display unit is configured to display the target content based on the target intention.

In some embodiments, the processing unit is configured to: match the target intention with a first database, wherein the first database corresponds to the first application; the display unit is configured to display the target content according to the matching result.

In some embodiments, the display unit is configured to: display the first answer information in the case that the target intention is successfully matched with the first database; display the second interface in the case that the target intention fails to match the first database.

In some embodiments, after displaying the target content, the display unit is further configured to: display target information in the second interface, wherein the target information is associated with the first session information; and/or display second answer information in response to a second input from user with respect to the second interface, wherein, the second input is configured to input second session information, the second answer information is determined based on a second database and the second session information, and the second database corresponds to the second application.

According to the fifth aspect of the present application, an electronic device is provided, comprising a processor and a memory. The memory stores programs or instructions which can be executed on the processor. When the programs or instructions are executed by the processor, the steps of the session information processing method in any technical solution of the first aspect described above are implemented; alternatively, when the programs or instructions are executed by the processor, the steps of the session information processing method in any technical solution of the third aspect described above are implemented.

According to the sixth aspect of the present application, a computer-readable storage medium is provided, in which programs or instructions are stored. When the programs or instructions are executed by a processor, the session information processing method in any technical solution of the first aspect described above is implemented; alternatively, when the programs or instructions are executed by the processor, the session information processing method in any technical solution of the third aspect described above is implemented.

The additional aspects and advantages of the present application will become apparent in the following description or may be learned through the practice of the present application.

### BRIEF DESCRIPTION OF THE DRAWINGS

The above-mentioned and/or additional aspects and advantages of the present application will become apparent and easily understandable from the description of the embodiments in conjunction with the following accompanying drawings, in which:
FIG. 1 shows a first schematic flow chart of a session information processing method according to an embodiment of the present application;
FIG. 2 shows a second schematic flow chart of a session information processing method according to an embodiment of the present application;
FIG. 3 shows a third schematic flow chart of a session information processing method according to an embodiment of the present application;
FIG. 4 shows a fourth schematic flow chart of a session information processing method according to an embodiment of the present application;
FIG. 5 shows a fifth schematic flow chart of a session information processing method according to an embodiment of the present application;
FIG. 6 shows the principle of a session information processing method according to an embodiment of the present application;
FIG. 7 shows a first schematic view of an operation interface of a session information processing method according to an embodiment of the present application;
FIG. 8 shows a first block diagram of the structure of a session information processing apparatus according to an embodiment of the present application;
FIG. 9 shows a sixth schematic flow chart of a session information processing method according to an embodiment of the present application;
FIG. 10 shows a seventh schematic flow chart of a session information processing method according to an embodiment of the present application;
FIG. 11 shows an eighth schematic flow chart of a session information processing method according to an embodiment of the present application;
FIG. 12 shows a ninth schematic flow chart of a session information processing method according to an embodiment of the present application;
FIG. 13 shows a tenth schematic flow chart of a session information processing method according to an embodiment of the present application;
FIG. 14 shows an eleventh schematic flow chart of a session information processing method according to an embodiment of the present application;
FIG. 15 shows a second schematic view of an operation interface of a session information processing method according to an embodiment of the present application;
FIG. 16 shows a second block diagram of the structure of a session information processing apparatus according to an embodiment of the present application; and
FIG. 17 shows a schematic view of the structure of an electronic device according to an embodiment of the present application.

### DETAILED DESCRIPTION

To more clearly understand the above purposes, features and advantages of the present application, the present application will be further described in detail hereinafter in combination with the accompanying drawings and embodiments. It should be noted that in the case of no conflict, the embodiments and the features in the embodiments of the present application can be combined with each other.

Many details are illustrated in the following description for the convenience of a thorough understanding of the present application, but the present application can further be implemented using other embodiments other than these described herein. Therefore, the protection scope of the present application is not limited to the specific embodiments disclosed in the following text.

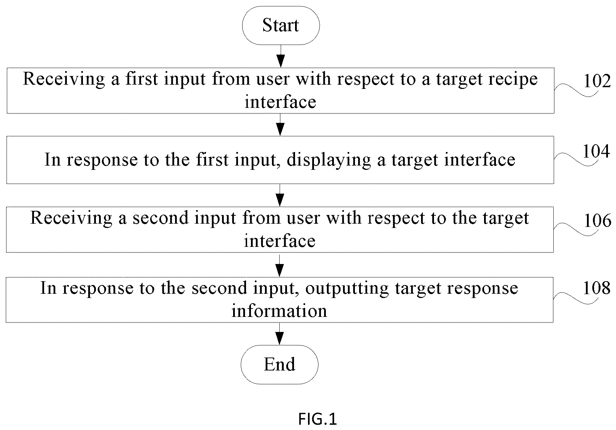

A session information processing method and apparatus, an electronic device, and a computer-readable storage medium according to specific embodiments and the application scenarios provided by the embodiments of the present application are described hereinafter by referring to FIG. 1 to FIG. 17.

In an embodiment of the present application, as shown in FIG. 1, the session information processing method specifically comprises the following Step 102 to Step 108.

Step 102, receiving a first input from user with respect to a target recipe interface;
Step 104, in response to the first input, displaying a target interface;
Step 106, receiving a second input from user with respect to the target interface; and
Step 108, in response to the second input, outputting target response information;
wherein, interface content of the target interface is associated with recipe content of a target recipe, the second input is configured to input target session information, and the target response information is determined according to a matching result between a first database and the target session information, and the first database is associated with the recipe content of the target recipe.

The executing subject of the technical solution of the session information processing method provided by the present application may be an electronic device, or a session information processing apparatus, and may further be determined according to actual use needs, which is not specifically limited herein. To more clearly describe the session information processing method provided by the present application, the following description is made by taking an electronic device as the executing subject of the session information processing method.

The session information processing method provided by the present application is configured to accurately answer cooking-related questions raised by users, to assist users in cooking and improve their cooking efficiency.

In some embodiments, the session information processing method provided by the present application may be specifically executed by an electronic device that has data analyzing and data processing functions.

In some embodiments, the above electronic device may specifically be smart devices such as a smart phone, a smart watch, a tablet, and a laptop, which is not specifically limited herein.

In some embodiments, when a user views a target recipe through an electronic device and thus opens the target recipe interface on the electronic device, the electronic device can receive a first input from user with respect to the target recipe interface. In response to the first input from user, the electronic device displays a question-and-answer interface (i.e., the above target interface) strongly associated with the above target recipe on its display screen. Wherein, the interface content displayed on the target interface is associated with the recipe content of the target recipe. On the above basis, the electronic device further receives a second input from user with respect to the above target interface, and the second input is the user's input of a target question (i.e., target session information) within the target interface. In response to the second input, the electronic device answers the target question raised by the user and outputs corresponding target response information. Wherein, the target response information is determined based on the matching result between the first database and the target question input by the user. The database content of the first database is strongly associated with the recipe content of the target recipe, that is, the first database stores a series of information data associated with the target recipe.

Thus, based on the inputs from user with respect to the target recipe interface, a question-and-answer interface strongly associated with the target recipe is displayed. Furthermore, based on the first database strongly associated with the target recipe, the target question associated with the target recipe input by the user in the question-and-answer interface is answered. In this way, firstly, the question-and-answer interface is strongly associated with the target recipe, enabling semantic parsing to the user question based on the recipe content and improving the accuracy of the semantic parsing to the user question; secondly, the user question is answered based on the first database strongly associated with the target recipe, i.e., targeted answer is provided to the user question according to the target recipe corresponding to the user question. This achieves refined processing on the user question, ensures a high degree of matching between the response information and the user question, and thus can effectively address the issue that different questions may have different answers in different recipes or cooking scenarios. On the above basis, accurate answers to the cooking-related questions raised by the user are realized, thereby improving user's cooking efficiency.

In some embodiments, the above first input is a user touch input for the target recipe interface of the electronic device. The touch input may specifically be a single-click input, double-click input, swipe input, input along a preset trajectory, etc. Those skilled in the art can set the specific form of the first input according to actual conditions, which is not specifically limited herein.

In some embodiments, the above target recipe interface may display a first control, which is configured to indicate the entrance of the above target interface. On this basis, the above first input may further specifically be a user touch input for the first control, which is not specifically limited herein.

In some embodiments, when the electronic device displays the question-and-answer interface (i.e., the above target interface), it may specifically switch its display interface from the target recipe interface to the target interface to display the target interface in full screen. In practical applications, the electronic device may further display a floating target window within the target recipe interface and show the target interface in the target window. Those skilled in the art can set the specific display mode of the target interface according to actual conditions, which is not specifically limited herein.

In some embodiments, the above second input is a user touch input for the target interface. In practical applications, an information input control may be displayed on the target interface. The second input may specifically be a user touch input for the information input control. In response to the touch input, the electronic device outputs corresponding target response information based on the first database and the target session information input by the user.

In some embodiments, the above information input control may specifically be a text input control or a voice input control, and the target session information may specifically be text session information or voice session information, which is not specifically limited herein.

In some embodiments, when the electronic device answers the target session information input by the user and thus outputs the target response information, in the case that the target session information is text session information, the electronic device directly matches and compares the text session information with a series of information data in the first database, and then responds to the text session information input by the user based on a matching result. In the case that the target session information is voice session information, the electronic device first converts the voice session information into text information, and then responds to the voice session information input by the user based on a matching and comparing result between the text information and the first database.

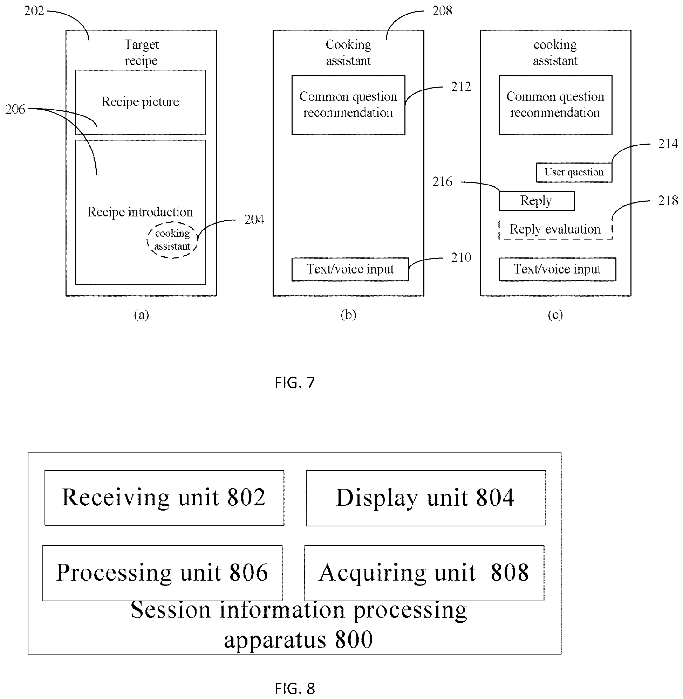

Exemplarily, as shown in (a) of FIG. 7, a target recipe interface 202 is displayed on the display screen of the electronic device. The target recipe interface 202 displays a first control 204 and first content 206. Wherein, the first content 206 can specifically be the recipe introduction and recipe pictures of the target recipe. The electronic device receives the user's single-click input for the first control 204. As shown in (b) of FIG. 7, in response to the user's single-click input for the first control 204, the electronic device jumps to display the target interface 208, where an information input control 210 and second content 212 are displayed. Wherein, the information input control 210 is a text input control or a voice input control, and the second content 212 is strongly associated with the recipe content of the target recipe. On the above basis, as shown in (c) of FIG. 7, the user can input target session information 214 in the target interface 208 through a touch input for the information input control 210. The target session information 214 is the text session information or the voice session information. In response to the user touch input, the electronic device answers the target session information 214 input by the user and outputs and displays the corresponding target response information 216.

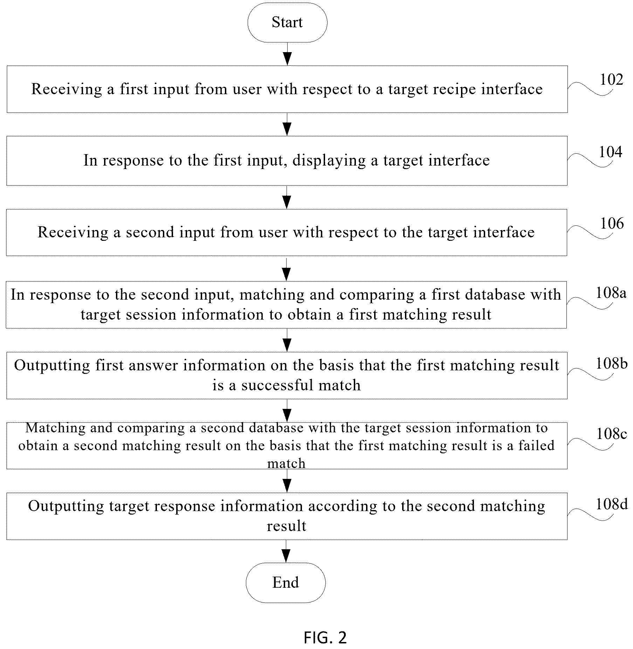

In some embodiments of the present application, the above target response information can specifically comprise first answer information. On this basis, as shown in FIG. 2, the above step 108 can specifically comprise the following Step 108a to Step 108d.

Step 108a, in response to the second input, matching and comparing the first database with the target session information to obtain a first matching result;
Step 108b, outputting the first answer information on the basis that the first matching result is a successful match;
Step 108c, matching and comparing a second database with the target session information to obtain a second matching result on the basis that the first matching result is a failed match;
Step 108d, outputting the target response information according to the second matching result;
wherein, the second database is a general database.

In the embodiment, when the electronic device answers the target session information input by the user and thus outputs the corresponding target response information, the electronic device matches and compares the target session information input by the user through the first database strongly associated with the target recipe, and outputs the corresponding first answer information based on the database content of the matched first database in the case that the first database is successfully matched with the above target session information. In the case that the first database fails to match the above target session information, the electronic device will continue to provide a fallback answer to the target question input by the user through a general database (i.e., the above second database). That is to say, the electronic device matches and compares the second database with the target session information input by the user, and answers the user question based on the matching result, thereby outputting the corresponding target response information. In this way, in the case that there is a matching answer in the first database strongly associated with the target recipe, the user question is answered based on the database content of the first database. In the case that there is not any matching answer in the first database, a fallback answer is provided for the user question based on the general database, which not only ensures the accuracy of answering the user question but further guarantees the effective response rate to the user question.

In some embodiments, the first database stores a series of recipe information data associated with the target recipe, and the second database stores a series of general information data in the cooking field.

In some embodiments, when the electronic device matches the first database with the user's target session information, it compares and matches the user's target session information with a series of recipe information data stored in the first database to determine whether there is recipe information data corresponding to the target session information in the first database.

In some embodiments, when the electronic device matches the second database with the user's target session information, it compares and matches the user's target session information with a series of general information data stored in the second database to determine whether there is general information data corresponding to the target session information in the second database.

In some embodiments, the above second database can be a database prestored in the storage space of the electronic device, and can further be a shared database of a third-party software or website, which is not specifically limited herein.

In some embodiments, the electronic device can establish different matching models for different target recipes, and then use the matching models to match and compare the first database with the target session information input by the user, thereby answering the user question. Wherein, the target recipe, the first database, and the matching model correspond to each other in a one-to-one way. On the above basis, the present application achieves targeted responses to the target session information input by the user, realizes refined processing on the user question, and ensures a high degree of matching between the response information and the user question. Thus, the present application can effectively address the issue that different questions may have different answers in different recipes or cooking scenarios, achieve accurate answers to the cooking-related questions raised by the user, and thereby improve the user's cooking efficiency.

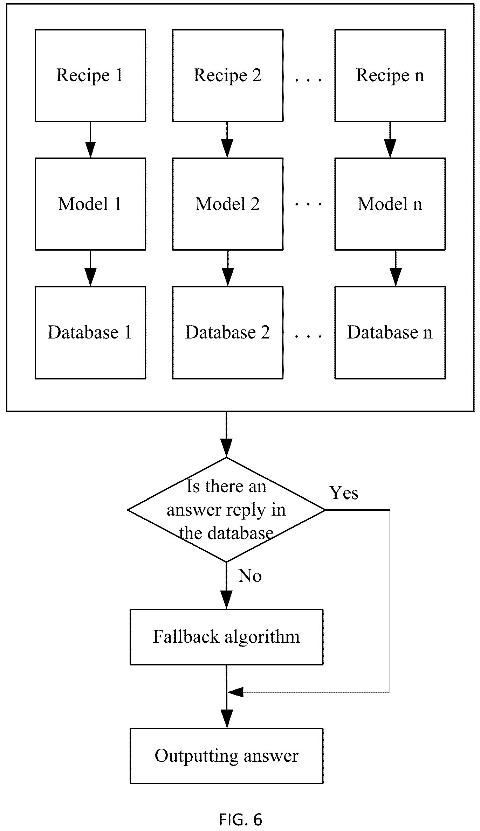

Exemplarily, as shown in FIG. 6, in the session information processing method provided in the embodiment of the present application, the target recipe, the first database, and the matching model correspond to each other in a one-to-one way. When the user raises a question for Recipe 1, the electronic device matches and compares the user question with Database 1 through Model 1; when the user raises a question for Recipe 2, the electronic device matches and compares the user question with Database 2 through Model 2; when the user raises a question for Recipe n, the electronic device matches and compares the user question with Database n through Model *n.* On the above basis, the electronic device determines whether the user question is successfully matched with the corresponding database, that is, it judges whether there is an answer reply corresponding to the user question in the database. In the case that there is an answer reply corresponding to the user question in the database, the electronic device directly outputs the corresponding answer information. In the case that there is not any answer reply corresponding to the user question in the database, the electronic device continues to answer the user question through the general database based on a fallback algorithm, thereby outputting the corresponding answer information.

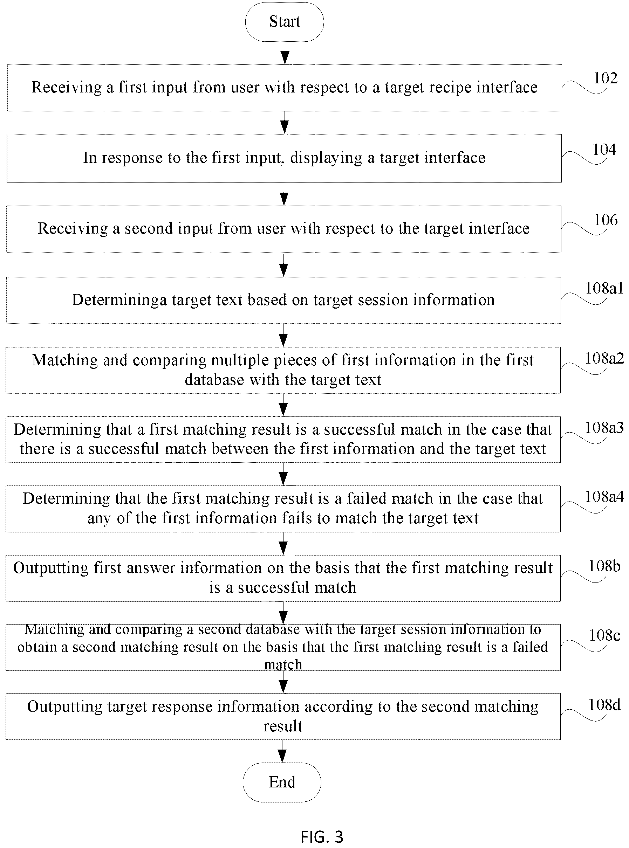

In some embodiments of the present application, as shown in FIG. 3, the above Step 108a may specifically comprise the following Step 108a1 to Step 108a4:
Step 108a1, determining a target text based on the target session information;
Step 108a2, matching and comparing multiple pieces of first information in the first database with the target text;
Step 108a3, determining that the first matching result is a successful match in the case that there is a successful match between the first information and the target text; and
Step 108a4, determining that the first matching result is a failed match in the case that any of the first information fails to match the target text;
wherein, the first information is associated with the target recipe.

In the embodiment, the first database stores a series of recipe information data (i.e., the above first information) associated with the target recipe. On the above basis, when the electronic device matches the first database with the user's target session information, it determines a corresponding target text according to the target session information input by the user, and compares and matches the series of recipe information data stored in the first database with the target text. On the above basis, in the case that there is corresponding recipe information data in the first database that matches the above target text, the electronic device determines that the first database is successfully matched with the target session information input by the user; in the case that none of the series of recipe information data stored in the first database matches the above target text, the electronic device determines that the matching between the first database and the target session information input by the user fails. In this way, based on the matching and comparing result between the series of recipe information data stored in the first database and the target text corresponding to the target session information input by the user, the matching result between the first database and the target session information is determined. This ensures the accuracy of determining the first matching result, and thereby guarantees the accuracy of the replies to the user questions.

In some embodiments, the above target session information can specifically be text session information or voice session information.

In some embodiments, when the electronic device determines the target text, in the case that the above target session information is text session information, the electronic device directly determines the text session information as the above target text; in the case that the above target session information is the voice session information, the electronic device performs text conversion for the voice session information to obtain the corresponding target text.

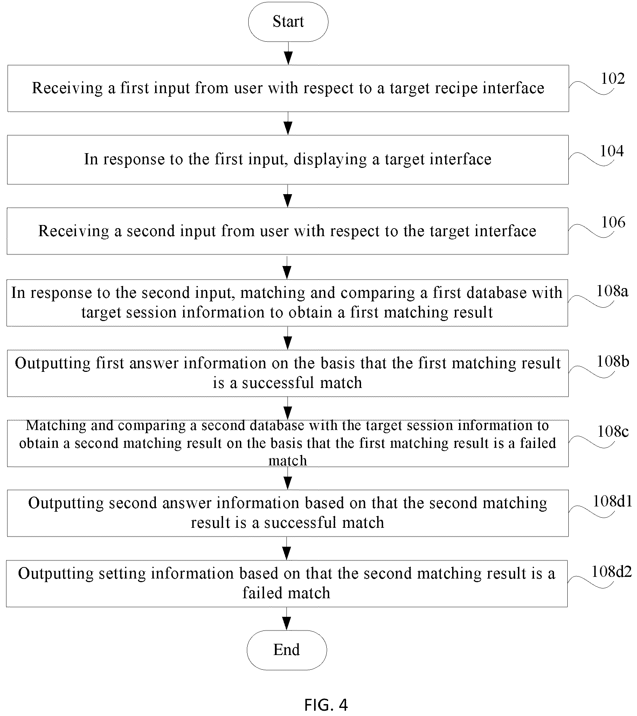

In some embodiments of the present application, the above target response information can specifically further comprise setting information and second answer information. On the above basis, as shown in FIG. 4, the above Step 108d can specifically comprise the following Step 108d1 and Step 108d2.

Step 108d1, outputting the second answer information based on that the second matching result is a successful match; and
Step 108d2, outputting the setting information based on that the second matching result is a failed match;
wherein the setting information indicates that the target session information does not have answer information.

In the embodiment, when the electronic device responds to the user question based on the matching and comparing result between the second database and the target session information input by the user, in the case that the second database is successfully matched with the above target session information, the electronic device outputs the corresponding second answer information based on the database content of the matched second database; in the case that the second database fails to match the above target session information, it indicates that the target question input by the user has not been successfully answered. At the moment, the electronic device outputs and displays the setting information, and the setting information indicates that there is not any answer information corresponding to the target question (i.e., the above target session information) input by the user in the database. In this way, if there is not any matching answer in the first database, a fallback answer is provided for the user question based on the general database, which not only ensures the accuracy of answering the user question but further guarantees the effective response rate to the user question.

In some embodiments, the above second database stores a series of general information data in the cooking field.

In some embodiments, when the electronic device matches the second database with the user's target session information, it matches and compares the series of general information data stored in the second database with the above target text. In the case that there is corresponding general information data in the second database that matches the above target text, the electronic device determines that the second database is successfully matched with the target session information input by the user, and outputs the corresponding second answer information based on the matched general information data in the second database. In the case that none of the series of general information data stored in the second database matches the above target text, the electronic device determines that the matching between the second database and the target session information input by the user fails, that is, it determines that there is not any answer information corresponding to the target question input by the user in either the first database or the second database, and outputs the above setting information. In this way, based on the matching and comparing result between the series of general information data stored in the second database and the above target text, the matching result between the second database and the target session information is determined, which ensures the accuracy of determining the second matching result, and thereby improves the accuracy of the replies to the user questions.

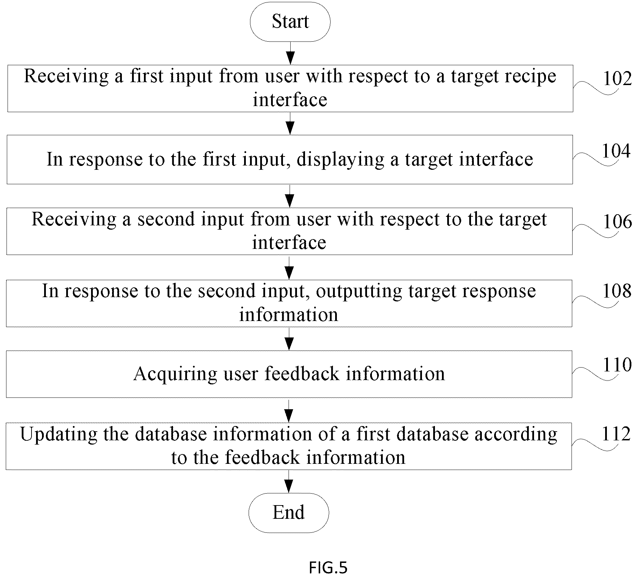

In some embodiments of the present application, as shown in FIG. 5, after the above Step 108, the session information processing method can specifically further comprise the following Step 110 and Step 112.
Step 110, acquiring user feedback information; and
Step 112, updating the database information of the first database according to the feedback information;
wherein, the feedback information is associated with the target response information.

In the embodiment, after the electronic device responds to the target question (i.e., the above target session information) input by the user, the user can make evaluation and feedback to the target response information output by the electronic device through touch input for the above target interface. On the above basis, the electronic device receives and responds to the user touch input for the target interface, and optimizes the database content of the first database based on the feedback information input by the user within the target interface, that is, updating the recipe information data stored in the first database. In this way, the database content of the first database is updated and optimized based on the user's evaluation to the target response information, which expands the data scope of the first database, and thereby further improves the accuracy of subsequent responses to the user questions.

In some embodiments, after the electronic device responds to the target question (i.e., the above target session information) input by the user, the electronic device can display a second control in the above target interface, and the second control is configured to evaluate the response information of the electronic device. On the above basis, the electronic device can receive and respond to a third input from user with respect to the above second control, and update the database content of the first database according to the evaluation information fed back by the user to the electronic device, to optimize the database content in the first database corresponding to the above target session information or add database content associated with the above target session information to the first database.

Exemplarily, as shown in (c) of FIG. 7, after the electronic device responds to the user touch input, answers the target session information 214 input by the user, and outputs and displays the corresponding target response information 216, the electronic device displays a second control 218 on the target interface 208. The user can feed back evaluation information on the target response information 216 to the electronic device through touch input for the second control 218. On the above basis, the electronic device receives and responds to the user touch input for the second control 218, and optimizes and updates the recipe information data in the first database based on the user's evaluation information.

In an embodiment of the present application, a session information processing apparatus is further provided. As shown in FIG. 8, FIG. 8 shows a block diagram of the structure of a session information processing apparatus 800 according to an embodiment of the present application. The session information processing apparatus 800 can specifically comprise a receiving unit 802, a display unit 804, and a processing unit 806 in the following.

The receiving unit 802 is configured to receive a first input from user with respect to a target recipe interface.

The display unit 804 is configured to display a target interface in response to the first input.

The receiving unit 802 is further configured to receive a second input from user with respect to the target interface.

The processing unit 806 is configured to output target response information in response to the second input;
Wherein, the interface content of the target interface is associated with the recipe content of a target recipe; the second input is configured to input target session information; the target response information is determined based on a matching result between a first database and the target session information, and the first database is associated with the recipe content of the target recipe.

The session information processing apparatus 800 provided in the embodiment of the present application is configured to accurately answer cooking-related questions raised by users, to assist users in cooking and improve their cooking efficiency.

In some embodiments, the session information processing apparatus 800 provided in the present application can be specifically applied to an electronic device that has data analyzing and data processing functions.

In some embodiments, the above electronic device can specifically be smart devices such as a smartphone, a smart watch, a tablet, and a laptop, which are not specifically limited herein.

The session information processing apparatus 800 provided in the present application comprises the receiving unit 802, the display unit 804, and the processing unit 806. When the user views a target recipe through an electronic device and thus opens a target recipe interface in the electronic device, the receiving unit 802 can receive a first input from user with respect to the target recipe interface. The display unit 804 responds to the first input from user and displays a question-and-answer interface (i.e., the above target interface) strongly associated with the above target recipe on the display screen of the electronic device. Wherein, the interface content displayed on the target interface is associated with the recipe content of the above target recipe. On the above basis, the receiving unit 802 further receives a second input from user with respect to the above target interface, and the second input is the user's input of a target question (i.e., target session information) in the target interface. The processing unit 806 responds to the above second input, answers the target question raised by the user, and outputs the corresponding target response information. Wherein, the above target response information is determined based on the matching result between the first database and the target question input by the user. The database content of the above first database is strongly associated with the recipe content of the above target recipe, that is, the first database stores a series of information data associated with the above target recipe.

Thus, based on the inputs from user on the target recipe interface, a question-and-answer interface strongly associated with the target recipe is displayed. Furthermore, based on the first database strongly associated with the target recipe, the target question associated with the target recipe input by the user in the question-and-answer interface is answered. In this way, firstly, the question-and-answer interface is strongly associated with the target recipe, enabling semantic parsing to the user question based on the recipe content and improving the accuracy of the semantic parsing to the user question; secondly, the user question is answered based on the first database strongly associated with the target recipe, i.e., targeted answer is provided to the user question according to the target recipe corresponding to the user question. This achieves refined processing on the user question, ensures a high degree of matching between the response information and the user question, and thus can effectively address the issue that different questions may have different answers in different recipes or cooking scenarios. On the above basis, accurate answers to the cooking-related questions raised by the user are realized, thereby improving user's cooking efficiency.

In some embodiments, the above first input is a user touch input for the target recipe interface of the electronic device. The touch input may specifically be a single-click input, double-click input, swipe input, input along a preset trajectory, etc. Those skilled in the art can set the specific form of the first input according to actual conditions, which is not specifically limited herein.

In some embodiments, the above target recipe interface may display a first control, which is configured to indicate the entrance of the above target interface. On this basis, the above first input may further specifically be a user touch input for the first control, which is not specifically limited herein.

In some embodiments, when the display unit 804 displays the question-and-answer interface (i.e., the above target interface), it may specifically switch the display interface of the electronic device from the target recipe interface to the target interface to display the target interface in full screen. In practical applications, the display unit 804 may further display a floating target window within the target recipe interface and show the target interface in this target window. Those skilled in the art can set the specific display mode of the target interface according to actual conditions, which is not specifically limited herein.

In some embodiments, the above second input is a user touch input for the target interface. In practical applications, an information input control may be displayed on the target interface. The second input may specifically be a user touch input for the information input control. In response to the touch input, the processing unit 806 outputs corresponding target response information based on the first database and the target session information input by the user.

In some embodiments, the above information input control may specifically be a text input control or a voice input control, and the target session information may specifically be text session information or voice session information, which is not specifically limited herein.

In some embodiments, when the processing unit answers the target session information input by the user and thus outputs the target response information, in the case that the target session information is text session information, the processing unit 806 directly matches and compares the text session information with a series of information data in the first database, and then responds to the text session information input by the user based on a matching result. In the case that the target session information is voice session information, the processing unit 806 first converts the voice session information into text information, and then responds to the voice session information input by the user based on a matching and comparing result between the text information and the first database.

In some embodiments of the present application, the target response information specifically comprises the first answer information, and on the above basis, the processing unit 806 is specifically configured to: match and compare the first database with the target session information in response to the second input, to obtain a first matching result; output first answer information based on that the first matching result is a successful match; match and compare a second database with the target session information to obtain a second matching result based on that the first matching result is a failed match; and output target response information according to the second matching result; wherein the second database is a general database.

In the embodiment, when the processing unit 806 answers the target session information input by the user and thus outputs the corresponding target response information, the processing unit 806 matches and compares the target session information input by the user through the first database strongly associated with the target recipe, and outputs the corresponding first answer information based on the database content of the matched first database in the case that the first database is successfully matched with the above target session information. In the case that the first database fails to match the above target session information, the processing unit 806 will continue to provide a fallback answer to the target question input by the user through a general database (i.e., the above second database). That is to say, the processing unit 806 matches and compares the second database with the target session information input by the user, and answers the user question based on the matching result, thereby outputting the corresponding target response information. In this way, in the case that there is a matching answer in the first database strongly associated with the target recipe, the user question is directly answered based on the database content of the first database. In the case that there is not any matching answer in the first database, a fallback answer is provided for the user question based on the general database, which not only ensures the accuracy of answering the user question but further guarantees the effective response rate to the user question.

In some embodiments, the first database stores a series of recipe information data associated with the target recipe, and the second database stores a series of general information data in the cooking field.

In some embodiments, when the processing unit 806 matches the first database with the user's target session information, it compares and matches the user's target session information with a series of recipe information data stored in the first database to determine whether there is recipe information data corresponding to the target session information in the first database.

In some embodiments, when the processing unit 806 matches the second database with the user's target session information, it compares and matches the user's target session information with a series of general information data stored in the second database to determine whether there is general information data corresponding to the target session information in the second database.

In some embodiments, the above second database can be a database prestored in the storage space of the electronic device, and can further be a shared database of a third-party software or website, which is not specifically limited herein.

In some embodiments, the electronic device can establish different matching models for different target recipes, and then use the matching models to match and compare the first database with the target session information input by the user, thereby answering the user question. Wherein, the target recipe, the first database, and the matching model correspond to each other in a one-to-one way. On the above basis, the present application achieves targeted responses to the target session information input by the user, realizes refined processing on the user question, and ensures a high degree of matching between the response information and the user question. Thus, the present application can effectively address the issue that different questions may have different answers in different recipes or cooking scenarios, achieve accurate answers to the cooking-related questions raised by the user, and thereby improve the user's cooking efficiency.

In some embodiments of the present application, the processing unit 806 is specifically configured to: determine a target text based on the target session information; match and compare multiple pieces of first information in the first database with the target text; determine that the first matching result is a successful match in the case that there is a successful match between the first information and the target text; and determine that the first matching result is a failed match in the case that any of the first information fails to match the target text, wherein the first information is associated with the target recipe.

In the embodiment, the first database stores a series of recipe information data (i.e., the above first information) associated with the target recipe. On the above basis, when the processing unit 806 matches the first database with the user's target session information, it determines a corresponding target text according to the target session information input by the user, and compares and matches the series of recipe information data stored in the first database with the target text. On the above basis, in the case that there is corresponding recipe information data in the first database that matches the above target text, the processing unit 806 determines that the first database is successfully matched with the target session information input by the user; in the case that none of the series of recipe information data stored in the first database matches the above target text, the processing unit 806 determines that the matching between the first database and the target session information input by the user fails. In this way, based on the matching and comparing result between the series of recipe information data stored in the first database and the target text corresponding to the target session information input by the user, the matching result between the first database and the target session information is determined. This ensures the accuracy of determining the first matching result, and thereby guarantees the accuracy of the replies to the user questions.

In some embodiments, the above target session information can specifically be text session information or voice session information.

In some embodiments, when the processing unit 806 determines the target text, in the case that the above target session information is text session information, the processing unit 806 directly determines the text session information as the above target text; in the case that the above target session information is the voice session information, the processing unit 806 performs text conversion for the voice session information to obtain the corresponding target text.

In some embodiments of the present application, the above target response information can further comprise setting information and second answer information. On the above basis, the processing unit 806 can specifically be configured to output the second answer information based on that the second matching result is a successful match; and output the setting information based on that the second matching result is a failed match, wherein the setting information indicates that the target session information does not have answer information.

In the embodiment, when the processing unit 806 responds to the user question based on the matching and comparing result between the second database and the target session information input by the user, in the case that the second database is successfully matched with the above target session information, the processing unit 806 outputs the corresponding second answer information based on the database content of the matched second database; in the case that the second database fails to match the above target session information, it indicates that the target question input by the user has not been successfully answered. At the moment, the processing unit 806 outputs the setting information, and the setting information indicates that there is not any answer information corresponding to the target question (i.e., the above target session information) input by the user in the database. In this way, if there is not any matching answer in the first database, a fallback answer is provided for the user question based on the general database, which not only ensures the accuracy of answering the user question but further guarantees the effective response rate to the user question.

In some embodiments, the above second database stores a series of general information data in the cooking field.

In some embodiments, when the processing unit 806 matches the second database with the user's target session information, it matches and compares the series of general information data stored in the second database with the above target text. In the case that there is corresponding general information data in the second database that matches the above target text, the processing unit 806 determines that the second database is successfully matched with the target session information input by the user, and outputs the corresponding second answer information based on the matched general information data in the second database. In the case that none of the series of general information data stored in the second database matches the above target text, the processing unit 806 determines that the matching between the second database and the target session information input by the user fails, that is, it determines that there is not any answer information corresponding to the target question input by the user in the first database or the second database, and outputs the above setting information. In this way, based on the matching and comparing result between the series of general information data stored in the second database and the above target text, the matching result between the second database and the target session information is determined, which ensures the accuracy of determining the second matching result, and thereby improves the accuracy of the replies to the user questions.

In some embodiments of the present application, as shown in FIG. 8, the session information processing apparatus 800specifically further comprises: an acquiring unit 808 configured to acquire user feedback information; and the processing unit 806 is further configured to update the database information of the first database according to the feedback information, wherein the feedback information is associated with the target response information.

In the embodiment, the session information processing apparatus 800can specifically further comprise the acquiring unit 808. After the electronic device responds to the target question (i.e., the above target session information) input by the user, the user can make evaluation and feedback to the target response information output by the electronic device through touch input for the above target interface. On the above basis, the acquiring unit 808 can receive the feedback information input by the user within the target interface, and optimizes the database content of the first database based on the feedback information input by the user, that is, updating the recipe information data stored in the first database. In this way, the database content of the first database is updated and optimized based on the user's evaluation to the target response information, which expands the data scope of the first database, and thereby further improves the accuracy of subsequent responses to the user questions.

In some embodiments, after the electronic device responds to the target question (i.e., the above target session information) input by the user, the display unit 804 can display a second control in the above target interface, and the second control is configured to evaluate the response information of the electronic device. On the above basis, the receiving unit 802 can receive a third input from user with respect to the above second control, and in response to the third input, the processing unit 806 update the database content of the first database according to the evaluation information fed back by the user to the electronic device, to optimize the database content in the first database corresponding to the above target session information or add database content associated with the above target session information to the first database.

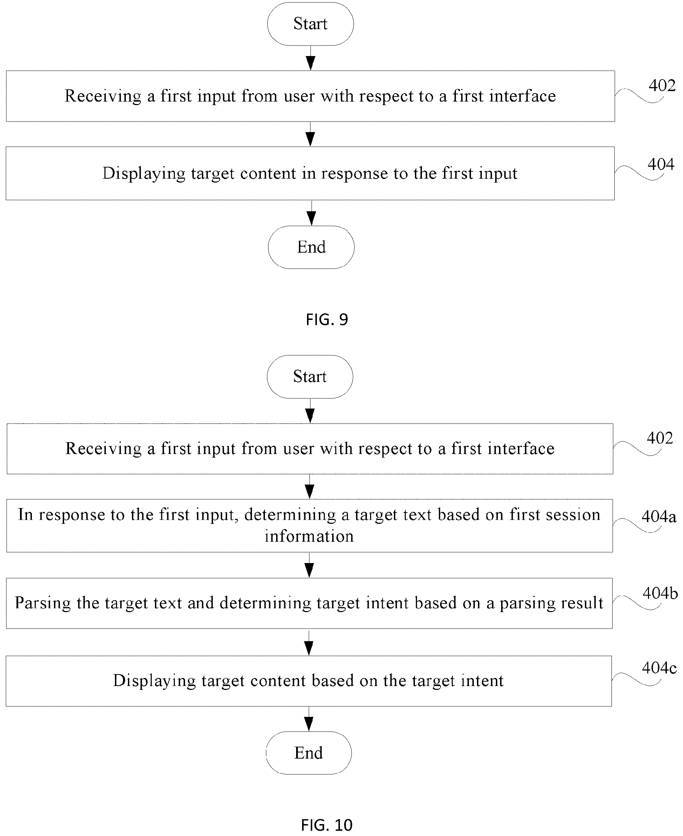

In an embodiment of the present application, another session information processing method is further provided, as shown in FIG. 9, and the session information processing method can specifically further comprise the following Step 402 and Step 404:
Step 402, receiving a first input from user with respect to a first interface; and
Step 404, displaying target content in response to the first input;
wherein the first interface is an application interface of a first application and the first input is configured to input first session information; the target content is a second interface or first answer information, the first session information corresponds to the first answer information and the second interface is an application interface of a second application associated with the first session information.

The executing subject of the technical solution of the session information processing method provided by the present application may be an electronic device, or a session information processing apparatus, and may further be determined according to actual use needs, which is not specifically limited herein. To more clearly describe the session information processing method provided by the present application, the following description is made by taking an electronic device as the executing subject of the session information processing method.

In some embodiments, the session information processing method provided by the present application may be specifically executed by an electronic device that has data analyzing and data processing functions.

In some embodiments, the above electronic device may specifically be smart devices such as a smartphone, a smart watch, a tablet, and a laptop, which is not specifically limited herein.

In some embodiments, in the session information processing method provided in the present application, when the user searches for or inquires about information through the first application in the electronic device and thus opens the application interface (i.e., the first interface) of the first application in the electronic device, the electronic device can receive a first input from user with respect to the application interface of the first application. The first input is the user's input of question information (i.e., the above first session information) in the application interface. On the above basis, the electronic device responds to the above first input, performs intent parsing on the first session information input by the user to determine the user intent, and then responds to the question-and-answer information input by the user based on the user intent and displays the target content to the user.

In some embodiments, the above target content can specifically be the first answer information corresponding to the first session information, or the above target content can be the application interface (i.e., the second interface) of the second application associated with the first session information. On the above basis, the electronic device searches and matches the data information stored in the first application based on the user intent. In the case that there is data information in the first application that matches the first session information, the electronic device directly outputs the first answer information corresponding to the above first session information according to the matched data information. In the case that there is not any data information in the first application that matches the first session information, the electronic device determines the second application associated with the user intent based on the first session information, and jumps to display the application interface (i.e., the above second interface) of the second application, and the user can continue to search for or inquire about relevant information in the second interface. In this way, when the user searches for or inquires about relevant information through the first application, if the first application can match the corresponding answer, it directly provides a reply based on the data information of the first application; if the first application cannot match the corresponding answer, it automatically jumps to the application interface of the associated second application to provide a reply. The user does not need to open different applications to search for relevant information, and this reduces the steps for the user to search for or inquire about information, lowers the time cost required for the user to obtain information, thereby improving the efficiency of the user's information search or inquiry and enhancing the user's efficiency in handing affairs.

Additionally, it should be noted that if the electronic device fails to successfully find the second application associated with the first session information, the electronic device directly outputs and displays the setting information in the first interface, and the setting information is configured to indicate that there is not any corresponding answer information for the above first session information.

In some embodiments, the above first interface can be displayed in full screen in the display interface of the electronic device, or the above first interface can further be displayed in a floating window in the display interface of the electronic device.

In some embodiments, a target identifier can be displayed in the display interface (such as a desktop interface) of the electronic device, and the target identifier is configured to indicate the entrance of the above first interface. On the above basis, the electronic device can respond to the user touch input for the target identifier, switch its display interface to the first interface for display and show the first interface in full screen; alternatively, the electronic device responds to the user touch input for the target identifier, displays a floating target window in the display interface of the electronic device, and shows the above first interface within the target window. Those skilled in the art can set the specific display mode of the above first interface according to actual conditions, which is not specifically limited herein.

In some embodiments, the above first input is a user touch input for the first interface. The touch input may specifically be a single-click input, double-click input, swipe input, input along a preset trajectory, etc. Those skilled in the art can set the specific form of the first input according to actual conditions, which is not specifically limited herein.

In some embodiments, an information input control can be displayed in the first interface. The above first input can specifically be a user touch input for the information input control. In response to the touch input, the electronic device responds to the question-and-answer information input by the user and displays the above target content to the user.

In some embodiments, the above information input control may specifically be a text input control or a voice input control, and the first session information may specifically be text session information or voice session information, which is not specifically limited herein.

In some embodiments, when the electronic device performs searching and matching for the data information stored in the first application based on the first session information input by the user, in the case that the above first session information is text session information, the electronic device directly performs searching and matching for the data information stored in the first application based on the text session information, and then responds to the text session information input by the user according to the matching result. In the case that the above first session information is voice session information, the electronic device converts the voice session information into the text information first, and then responds to the voice session information input by the user based on the text information and the searching and matching result for the data information stored in the first application.

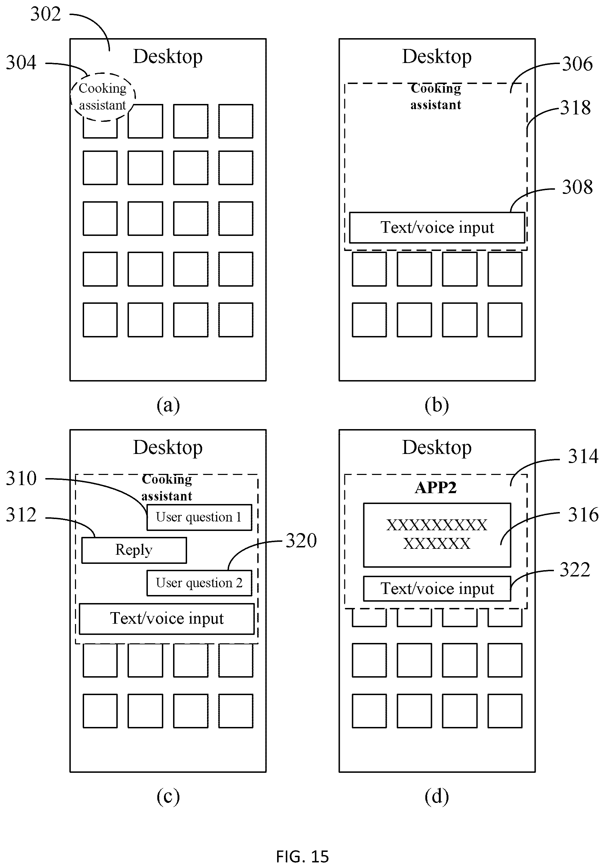

Exemplarily, as shown in (a) of FIG. 15, a target identifier 304 is displayed in the display interface 302 of the electronic device. The electronic device receives a single-click input from user with respect to the target identifier 304. As shown in (b) of FIG. 15, in response to the single-click input from user with respect to the target identifier 304, the electronic device displays a floating target window 318 in the display interface 302, and shows the first interface 306 within the target window 318. Wherein, the first interface 306 displays a first information input control 308, and the first information input control 308 is a text input control or a voice input control. On the above basis, as shown in (c) of FIG. 15, the user can input first question information 310 in the first interface 306 through the first input for the first information input control 308, and the first question information 310 is the text session information or the voice session information. In response to the first input from user, the electronic device performs searching and matching for the data information stored in the first application based on the first question information 310 input by the user. In the case that there is data information in the first application that matches the first question information 310, as shown in (c) of FIG. 15, the electronic device directly outputs and displays the first answer information 312 corresponding to the above first question information 310 in the first interface 306 according to the matched data information. In the case that there is not any data information in the first application that matches the first question information 310, as shown in (d) of FIG. 15, the electronic device determines the second application (i.e., APP2) associated with the user intent based on the first question information 310, and jumps to display the application interface (i.e., the second interface 314) of the second application.

In some embodiments of the present application, as shown in FIG. 10, the above step 404 can specifically comprise the following Step 404a to Step 404c.

Step 404a, in response to the first input, determining the target text based on the first session information;
Step 404b, parsing the target text and determining the target intent based on a parsing result; and
Step 404c, displaying the target content based on the target intent.

In the embodiment, when the electronic device responds to the first session information input by the user and displays the above target content to the user, the electronic device determines the corresponding target text based on the first session information input by the user, performs intent parsing for the target text to determine the user's target intent, and then responds to the question-and-answer information input by the user according to the user's target intent and displays the above target content to the user. In this way, the user intent is determined based on the question information input by the user, and the corresponding target content is then displayed to the user based on the user intent. This ensures a high degree of matching between the output target content and the user intent, and thereby guarantees the accuracy of the response to the user question and meets the user needs.

In some embodiments, the above first session information can specifically be text session information or voice session information.

In some embodiments, when the electronic device determines the target text, in the case that the above first session information is text session information, the electronic device directly determines the text session information as the above target text; in the case that the above target session information is the voice session information, the electronic device performs text conversion for the voice session information to obtain the corresponding target text.

In some embodiments, in the process of parsing the target text, the electronic device can specifically perform semantic analysis processing for the target text to extract at least one piece of keyword information or semantic information from the target text, and then determine the user intent based on the extracted at least one piece of keyword information or semantic information.

In some embodiments, in the process of displaying the corresponding target content to the user based on the user intent, the electronic device performs searching and matching for the data information stored in the first application based on the target intent. In the case that there is data information in the first application that matches the target intent, the electronic device directly outputs the corresponding first answer information according to the matched data information. In the case that there is not any data information in the first application that matches the target intent, the electronic device determines the second application associated with the target intent based on the target intent, and jumps to display the application interface (i.e., the above second interface) of the second application, and the user can continue to search for or inquire about relevant information in the second interface.

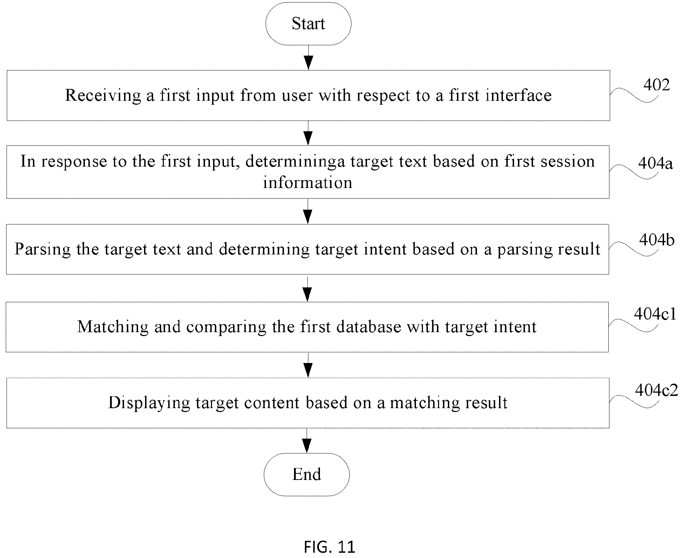

In some embodiments of the present application, as shown in FIG. 11, the above Step 404c can specifically comprise the following Step 404c1 and Step 404c2.

Step 404c1, matching and comparing the first database with the target intent; and
Step 404c2, displaying the target content based on the matching result;
wherein, the first database corresponds to the first application.

In the embodiment, when the electronic device responds to the user question based on the user intent and then displays the above target content, after the electronic device determines the user's target intent based on the first session information input by the user, it performs searching and matching for the database content of the first database of the first application based on the target intent, and then responds to the user question according to the matching result and displays the above target content to the user. In this way, the user question is responded based on the matching result between the user intent and the first database of the first application, which ensures a high degree of matching between the output target content and the user intent, and thereby guarantees the accuracy of answering the user question and meets the user needs.

In practical applications, after the electronic device responds to the above first session information input by the user through the first database and outputs the corresponding first answer information, the user can provide evaluation feedback to the first answer information output by the electronic device through a touch input of the above first interface. On the above basis, the electronic device receives and responds to the user touch input for the first interface, and updates the database content of the first database based on the feedback information input by the user in the first interface, to optimize the database content in the first database corresponding to the above first session information or add database content associated with the above first session information to the first database. In this way, the database content of the first database is updated and optimized based on the user's evaluation to the first answer information, which expands the data scope of the first database, and thereby further improves the accuracy of subsequent responses to the user question.

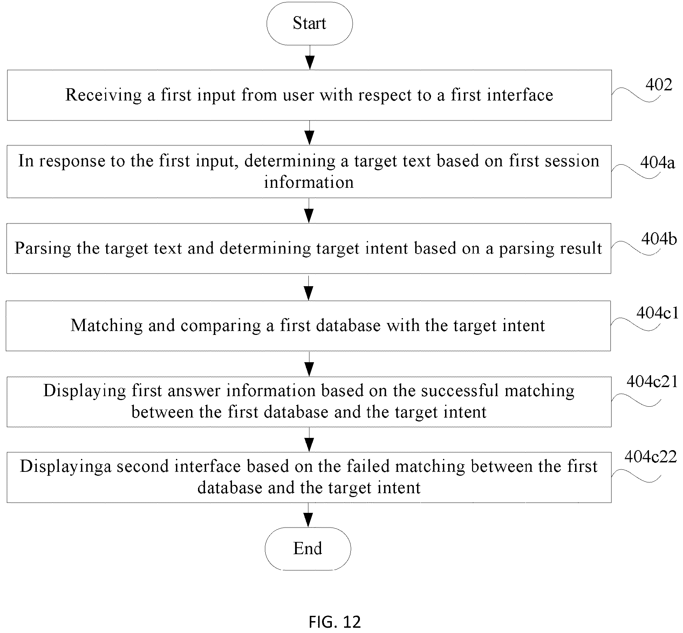

In some embodiments of the present application, as shown in FIG. 12, the above Step 404c2 can specifically comprise the following Steps 404c21 and Step 404c22.

Step 404c21, displaying the first answer information based on the successful matching between the first database and the target intent;
Step 404c22, displaying the second interface based on the failed matching between the first database and the target intent.

In the embodiment, when the electronic device responds to the user question based on the matching result between the user intent and the first database of the first application, in the case that the database content of the first database is successfully matched with the user's target intent, the electronic device directly outputs the corresponding first answer information based on the matched database content in the first database. In the case that the database content of the first database fails to match the user's target intent, the electronic device determines the second application associated with the target intent based on the target intent, and jumps to display the application interface (i.e., the above second interface) of the second application, and the user continues to search for or inquire about relevant information in the second interface. In this way, when the user searches for or inquires about relevant information through the first application, if the first application can match the corresponding answer, it directly provides a reply based on the data information of the first application; if the first application cannot match the corresponding answer, it automatically jumps to the application interface of the associated second application to provide a reply. This reduces the steps for the user to search for or inquire about information, and thereby improves the efficiency of the user's information search or inquiry and enhances the user's efficiency in handling affairs.

In some embodiments, the first database stores multiple pieces of first information, and the multiple pieces of first information are a series of application data information associated with the content of the first application.

In some embodiments, when the electronic device matches the first database with the user's target intent, it matches and compares the multiple pieces of first information stored in the first database with the target intent. In the case that there is first information in the first database that matches the above target intent, the electronic device determines that the matching between the first database and the user's target intent is successful; in the case that none of the multiple pieces of first information stored in the first database matches the above target intent, the electronic device determines that the matching between the first database and the user's target intent fails. In this way, the matching result between the first database and the target intent is determined based on the matching and comparing result between the series of application data information stored in the first database and the user intent, which ensures the accuracy of determining the matching result and thus guarantees the accuracy of responding to the user question.

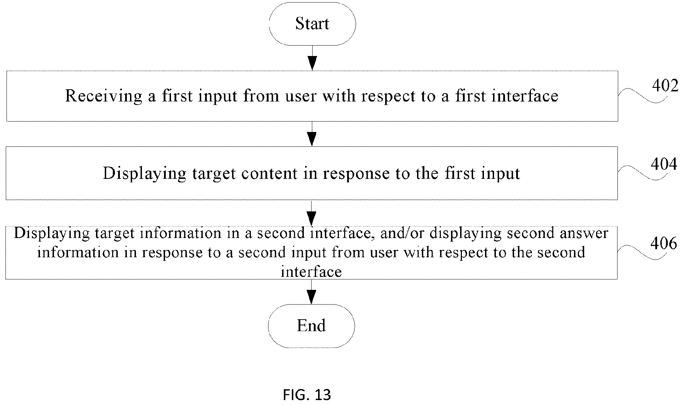

In some embodiments of the present application, as shown in FIG. 13, after the above Step 404, the above session information processing method can specifically further comprise the following Step 406.

Step 406, displaying the target information in the second interface, and/or displaying the second answer information in response to the second input from user with respect to the second interface;
wherein, the target information is associated with the first session information, the second input is configured to input the second session information, the second answer information is determined based on the second session information and a second database, and the second database corresponds to the second application.

In the embodiment, after the electronic device determines the associated second application based on the user intent and displays the second interface, the electronic device can display target information associated with the above first session information in the second interface, and the user can find the desired answer information by browsing the target information. For example, in the case that the above second interface is a recipe search interface, the electronic device can display target information such as recipe recommendation information and recipe screening information in the second interface. On the above basis, the user can browse the recommended recipe information in the second interface, and the user can further screen the recipe information in the second interface according to conditions such as personal preferences, available ingredients, and nutritional and health needs, thereby finding specific recipe content that meets their own requirements.

In the embodiment, after displaying the above second interface, the electronic device can further receive the second input from user with respect to the second session information input in the second interface. In response to the second input from user, the electronic device performs searching and matching for the data information stored in the second database of the second application based on the second session information input by the user, and directly outputs the second answer information corresponding to the above second session information according to the matched data information in the case that there is data information in the second database that matches the second session information.

Exemplarily, in the case that the above second interface is a home smart device management interface, the user can, through the second input for the second interface, inquire about information content such as device usage skills, device usage and maintenance, device repair and support, and device control, and the user can better use the smart device. In the case that the above second interface is a recipe content interface, the user can, through the second input for the second interface, ask questions associated with recipe content and device voice control, such as questions about ingredient preparation, cooking tools, device usage method, operation steps, cooking failure phenomena and causes, to facilitate the user's cooking process. In the case that the above second interface is a nutrition and health interface, the user can, through the second input for the second interface, ask questions associated with nutrition and health, such as ingredients suitable for different groups of people, high and low nutrition content of ingredients, and nutrition rankings.

In this way, after the electronic device jumps to display the second interface based on the user's first session information, the electronic device can display the target information associated with the above first session information in the second interface, or continue to reply to the second session information input by the user in the second interface. Thus, when the first application cannot find required information, it automatically jumps to the application interface of the associated second application to continue the relevant question and answer process. This reduces the steps for the user to search for or inquire about information, and thereby improves the efficiency of the user's information search or inquiry and enhancing the user's efficiency in handling affairs.

In some embodiments, the above second session information can specifically be the text session information or the voice session information. After the electronic device displays the second interface based on the user's first session information, the user can continue to search for or inquire about relevant information in the second interface through text input or voice input for the second interface.

In some embodiments, the second database stores multiple pieces of second information, and the multiple pieces of second information are a series of application data information associated with the content of the second application.

In some embodiments, when the electronic device matches the second database with the second session information input by the user, it matches and compares the multiple pieces of second information stored in the second database with the second session information. In the case that there is second information in the second database that matches the above second session information, the electronic device determines that the matching between the second database and the second session information is successful, and outputs the corresponding second answer information according to the matched second information. In the case that none of the multiple pieces of second information in the second database matches the above second session information, the electronic device continues to search for an associated third application based on the second session information, and jumps to the application interface of a third application to continue the question-and-answer operation in the case that the third application is successfully found, and the electronic device directly outputs setting information to notify the user that no answer information of the second session information is matched in the case that no associated third application is found.

Exemplarily, as shown in (c) of FIG. 15, the user can input second question information 320 in the first interface 306 through the first input for the first information input control 308, and the second question information 320 is the text session information or the voice session information. In response to the first input from user, the electronic device performs searching and matching for the data information stored in the first application based on the second question information 320 input by the user. In the case that there is not any data information in the first application that matches the second question information 320, as shown in (d) of FIG. 15, the electronic device determines the second application associated with the second question information 320, and jumps to display the application interface (i.e., the second interface 314) of the second application and display target information 316 in the second interface 314.Wherein, the target information 316 is associated with the second question information 320. A second information input control 322 is further displayed in the second interface 314. The second information input control 322 is a text input control or a voice input control, and the user can, through a touch input for the second information input control 322, continue to conduct question and answer interaction based on the database content of the second database in the second interface 314.

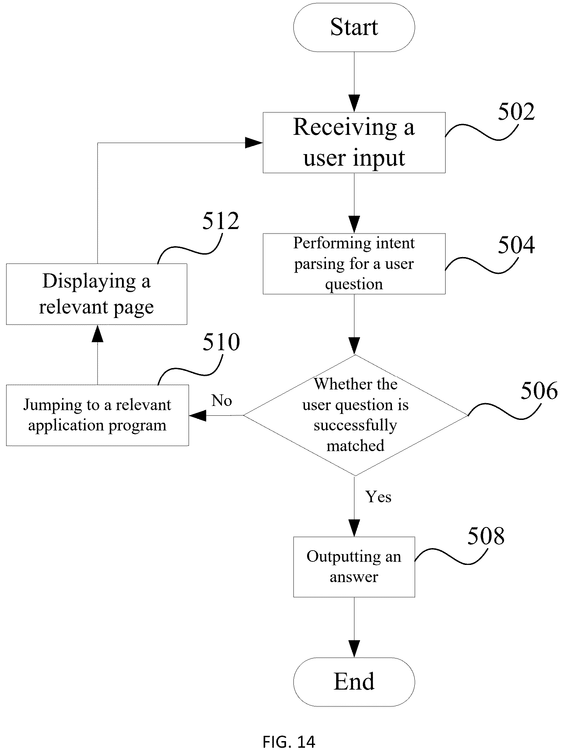

In an embodiment of the present application, as shown in FIG. 14, the session information processing method can specifically comprise the following Step 502 to Step 512.
Step 502, receiving a input from user;
Step 504, performing intent parsing for a user question;
Step 506, determining whether the user question is successfully matched; if yes, executing step 508; if no, executing step 510;
Step 508, outputting an answer;
Step 510, jumping to a relevant application program; and
Step 512, displaying a relevant page.

In some embodiments, in the session information processing method provided by the embodiments of the present application, the electronic device can receive a input from user, determine a user question based on the input from user, and then perform intent parsing for the user question to determine the user intent. On the above basis, the electronic device further matches the user question through database information based on the user intent. In the case that the user question is successfully matched with the database information, the electronic device directly outputs answer information corresponding to the user question based on the matched database information; in the case that the user question fails to match the database information, the electronic device determines an application program associated with the user question based on the user intent. On the above basis, the electronic device jumps to the interface of the application program and displays the application page in the application program that is associated with the user question, and the user can continue to perform question-and-answer operations through input for the application interface of the application program. In this way, when the user searches for or inquires about relevant information through a certain application, if the application can match a corresponding answer, it directly provides a reply based on the data information of the application; if the application cannot match the corresponding answer, it automatically jumps to the application interface of another application program associated with the user question to provide a reply. This reduces the steps for the user to search for or inquire about information, and thereby improves the efficiency of the user's information search or inquiry and enhancing the user's efficiency in handling affairs.

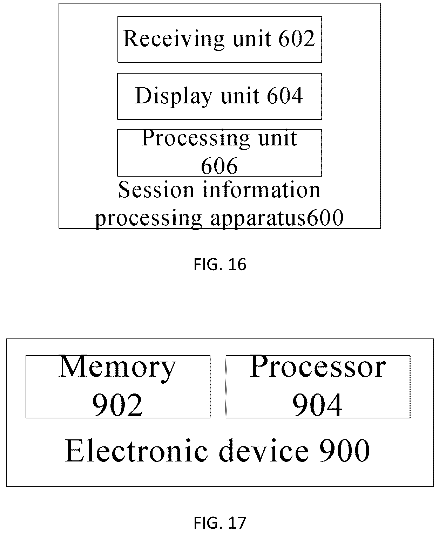

In an embodiment of the present application, another session information processing apparatus is further provided. As shown in FIG. 16, FIG. 16 shows a block diagram of the structure of a session information processing apparatus 600 according to an embodiment of the present application. Wherein, the session information processing apparatus 600 can specifically comprise a receiving unit 602 and a display unit 604 in the following.

The receiving unit 602 is configured to receive a first input from user with respect to a first interface.

The display unit 604 is configured to display target content in response to the first input.

Wherein, the first interface is an application interface of a first application and the first input is configured to input first session information; the target content is a second interface or first answer information, the first session information corresponds to the first answer information and the second interface is an application interface of a second application associated with the first session information.

The session information processing apparatus 600 provided by the embodiments of the present application can be specifically applied to an electronic device that has data analyzing and data processing functions.

In practical application, the above electronic device can specifically be smart devices such as a smartphone, a smart watch, a tablet, and a laptop, which are not specifically limited herein.

In some embodiments, the session information processing apparatus 600 provided by the present application comprises the receiving unit 602 and the display unit 604. When the user searches for or inquires about information through the first application in the electronic device and thus opens the application interface (i.e., the first interface) of the first application on the electronic device, the receiving unit 602 can receive the first input from user on the application interface of the first application. The first input is the user's input of question information (i.e., the above first session information) in the application interface. On the above basis, the display unit 604 responds to the above first input, responds to the question-and-answer information input by the user, and displays target content to the user.

In some embodiments, the above target content can specifically be the first answer information corresponding to the first session information, or the above target content can be the application interface (i.e., the second interface)of the second application associated with the first session information. In some embodiments, the electronic device conducts intent parsing to the first session information input by the user to determine the user intent, and further searches and matches the data information stored in the first application based on the user intent. In the case that there is data information in the first application that matches the first session information, the electronic device directly outputs the first answer information corresponding to the above first session information according to the matched data information. In the case that there is not any data information in the first application that matches the first session information, the electronic device determines the second application associated with the user intent based on the first session information, and jumps to the application interface (i.e., the above second interface) of the second application, and the user can continue to search for or inquire about relevant information in the second interface. In this way, when the user searches for or inquires about relevant information through the first application, if the first application can match the corresponding answer, it directly provides a reply based on the data information of the first application; if the first application cannot match the corresponding answer, it automatically jumps to the application interface of the associated second application to provide a reply. The user does not need to open different applications to search for relevant information, and this reduces the steps for the user to search for or inquire about information, lowers the time cost required for the user to obtain information, thereby improving the efficiency of the user's information search or inquiry and enhancing the user's efficiency in handing affairs.

Additionally, it should be noted that if the electronic device fails to successfully find the second application associated with the first session information, the electronic device directly outputs the setting information in the first interface, and the setting information is configured to indicate that there is not any corresponding answer information for the above first session information.

In some embodiments, the above first interface can be displayed in full screen in the display interface of the electronic device, or the above first interface can further be displayed in a floating window in the display interface of the electronic device.

In some embodiments, a target identifier can be displayed in the display interface (such as a desktop interface) of the electronic device, and the target identifier is configured to indicate the entrance of the above first interface. On the above basis, the display unit 604can respond to the user touch input for the target identifier, switch the display interface of the electronic device to the first interface for display and show the first interface in full screen; alternatively, the display unit 604 responds to the user touch input for the target identifier, displays a floating target window in the display interface of the electronic device, and shows the above first interface within the target window. Those skilled in the art can set the specific display mode of the above first interface according to actual conditions, which is not specifically limited herein.

In some embodiments, the above first input is a user touch input for the first interface. The touch input may specifically be a single-click input, double-click input, swipe input, input along a preset trajectory, etc. Those skilled in the art can set the specific form of the first input according to actual conditions, which is not specifically limited herein.

In some embodiments, an information input control can be displayed in the first interface. The above first input can specifically be a user touch input for the information input control. In response to the touch input, the display unit 604 responds to the question-and-answer information input by the user and displays the above target content to the user.

In some embodiments, the above information input control may specifically be a text input control or a voice input control, and the first session information may specifically be text session information or voice session information, which is not specifically limited herein.

In some embodiments, when the electronic device performs searching and matching for the data information stored in the first application based on the first session information input by the user, in the case that the above first session information is text session information, the electronic device directly performs searching and matching for the data information stored in the first application based on the text session information, and then responds to the text session information input by the user according to the matching result. In the case that the above first session information is voice session information, the electronic device converts the voice session information into the text information first, and then responds to the voice session information input by the user based on the text information and the searching and matching result for the data information stored in the first application.

In some embodiments of the present application, as shown in FIG. 16, the session information processing apparatus 600 further comprises a processing unit 606.The processing unit 606 is configured to determine a target text based on the first session information in response to the first input, parse the target text, and determine the target intention according to a parsing result; the display unit 604 is specifically configured to display the target content based on the target intention.

In the embodiment, the session information processing apparatus 600 further comprises the processing unit 606. When the electronic device responds to the first session information input by the user and displays the above target content to the user, the processing unit 606 determines the corresponding target text based on the first session information input by the user, performs intent parsing for the target text to determine the user's target intent, and then responds to the question-and-answer information input by the user according to the user's target intent and displays the above target content to the user through the display unit 604. In this way, the user intent is determined based on the question information input by the user, and the corresponding target content is then displayed to the user based on the user intent. This ensures a high degree of matching between the output target content and the user intent, and thereby guarantees the accuracy of the response to the user question and meets the user needs.

In some embodiments, the above first session information can specifically be text session information or voice session information.

In some embodiments, when the processing unit 606 determines the target text, in the case that the above first session information is text session information, the processing unit 606 directly determines the text session information as the above target text; in the case that the above target session information is the voice session information, the processing unit 606 performs text conversion for the voice session information to obtain the corresponding target text.

In some embodiments, in the process of parsing the target text, the processing unit 606can specifically perform semantic analysis processing for the target text to extract at least one piece of keyword information or semantic information from the target text, and then determine the user intent based on the extracted at least one piece of keyword information or semantic information.

In some embodiments, when the electronic device displays the corresponding target content to the user based on the user intent, the processing unit 606 performs searching and matching for the data information stored in the first application based on the target intent. In the case that there is data information in the first application that matches the target intent, the processing unit 606 directly outputs the corresponding first answer information according to the matched data information. In the case that there is not any data information in the first application that matches the target intent, the processing unit 606 determines the second application associated with the target intent based on the target intent, and displays the application interface (i.e., the above second interface) of the second application through the display unit 604, and the user can continue to search for or inquire about relevant information in the second interface.

In some embodiments of the present application, the processing unit 606 is specifically configured to: match and compare a first database with the target intention; the display unit 604 is specifically configured to display the target content according to the matching result, wherein the first database corresponds to the first application.

In the embodiment, when the processing unit 606 responds to the user question based on the user intent, after the processing unit 606 determines the user's target intent based on the first session information input by the user, it performs searching and matching for the database content of the first database of the first application based on the target intent, and then responds to the user question according to the matching result and displays the above target content to the user through the display unit 604. In this way, the user question is responded based on the matching result between the user intent and the first database of the first application, which ensures a high degree of matching between the output target content and the user intent, and thereby guarantees the accuracy of answering the user question and meets the user needs.

In practical application, after the processing unit 606 responds to the above first session information input by the user through the first database and outputs the corresponding first answer information, the user can provide evaluation feedback to the first answer information output by the electronic device through a touch input of the above first interface. On the above basis, the processing unit 606 further updates the database content of the first database based on the feedback information input by the user in the first interface, to optimize the database content in the first database corresponding to the above first session information or add database content associated with the above first session information to the first database. In this way, the database content of the first database is updated and optimized based on the user's evaluation to the first answer information, which expands the data scope of the first database, and thereby further improves the accuracy of subsequent responses to the user question.

In some embodiments of the present application, the display unit 604 is specifically configured to: display the first answer information based on that the first data base is successfully matched with the target intention; display the second interface based on that the first database fails to match the target intention.

In the embodiment, when the processing unit 606 responds to the user question based on the matching result between the user intent and the first database of the first application, in the case that the database content of the first database is successfully matched with the user's target intent, the processing unit 606 directly outputs the corresponding first answer information based on the matched database content in the first database. In the case that the database content of the first database fails to match the user's target intent, the processing unit 606 determines the second application associated with the target intent based on the target intent, and displays the application interface (i.e., the above second interface) of the second application through the display unit 604, and the user continues to search for or inquire about relevant information in the second interface. In this way, when the user searches for or inquires about relevant information through the first application, if the first application can match the corresponding answer, it directly provides a reply based on the data information of the first application; if the first application cannot match the corresponding answer, it automatically jumps to the application interface of the associated second application to provide a reply. This reduces the steps for the user to search for or inquire about information, and thereby improves the efficiency of the user's information search or inquiry and enhances the user's efficiency in handling affairs.

In some embodiments, the first database stores multiple pieces of first information, and the multiple pieces of first information are a series of application data information associated with the content of the first application.

In some embodiments, when the processing unit 606 matches the first database with the user's target intent, it matches and compares the multiple pieces of first information stored in the first database with the target intent. In the case that there is first information in the first database that matches the above target intent, the processing unit 606 determines that the matching between the first database and the user's target intent is successful; in the case that none of the multiple pieces of first information stored in the first database matches the above target intent, the processing unit 606 determines that the matching between the first database and the user's target intent fails. In this way, the matching result between the first database and the target intent is determined based on the matching and comparing result between the series of application data information stored in the first database and the user intent, which ensures the accuracy of determining the matching result and thus guarantees the accuracy of responding to the user question.

In some embodiments of the present application, the display unit 604 is further configured to: display target information on the second interface; and/or display second answer information in response to a second input from user with respect to the second interface, wherein, the target information is associated with the first session information, the second input is configured to input second session information, the second answer information is determined based on the second session information and a second database, and the second database corresponds to the second application.

In the embodiment, after the display unit 604 displays the second interface, the display unit 604canfurther display target information associated with the above first session information in the second interface, and the user can find the desired answer information by browsing the target information. For example, in the case that the above second interface is a recipe search interface, the display unit 604can display target information such as recipe recommendation information and recipe screening information in the second interface. On the above basis, the user can browse the recommended recipe information in the second interface, and the user can further screen the recipe information in the second interface according to conditions such as personal preferences, available ingredients, and nutritional and health needs, thereby finding specific recipe content that meets their own requirements.

In the embodiment, after displaying the above second interface, the receiving unit 602can further receive the second input from user with respect to the second session information input in the second interface. In response to the second input from user, the processing unit 606 performs searching and matching for the data information stored in the second database of the second application based on the second session information input by the user, and directly outputs the second answer information corresponding to the above second session information according to the matched data information in the case that there is data information in the second database that matches the second session information.

Exemplarily, in the case that the above second interface is a home smart device management interface, the user can, through the second input for the second interface, inquire about information content such as device usage skills, device usage and maintenance, device repair and support, and device control, and the user can better use the smart device. In the case that the above second interface is a recipe content interface, the user can, through the second input for the second interface, ask questions associated with recipe content and device voice control, such as questions about ingredient preparation, cooking tools, device usage method, operation steps, cooking failure phenomena and causes, to facilitate the user's cooking process. In the case that the above second interface is a nutrition and health interface, the user can, through the second input for the second interface, ask questions associated with nutrition and health, such as ingredients suitable for different groups of people, high and low nutrition content of ingredients, and nutrition rankings.

In this way, after the electronic device jumps to display the second interface based on the user's first session information, the electronic device can display the target information associated with the above first session information in the second interface, or continue to reply to the second session information input by the user in the second interface. Thus, when the first application cannot find required information, it automatically jumps to the application interface of the associated second application to continue the relevant question and answer process. This reduces the steps for the user to search for or inquire about information, and thereby improves the efficiency of the user's information search or inquiry and enhancing the user's efficiency in handling affairs.

In some embodiments, the above second session information can specifically be the text session information or the voice session information. After the electronic device displays the second interface based on the user's first session information, the user can continue to search for or inquire about relevant information in the second interface through text input or voice input for the second interface.

In some embodiments, the second database stores multiple pieces of second information, and the multiple pieces of second information are a series of application data information associated with the content of the second application.

In some embodiments, when the processing unit 606 matches the second database with the second session information input by the user, it matches and compares the multiple pieces of second information stored in the second database with the second session information. In the case that there is second information in the second database that matches the above second session information, the processing unit 606 determines that the matching between the second database and the second session information is successful, and outputs the corresponding second answer information according to the matched second information. In the case that none of the multiple pieces of second information in the second database matches the above second session information, the processing unit 606 continues to search for an associated third application based on the second session information, and jumps to the application interface of a third application to continue the question-and-answer operation in the case that the third application is successfully found, and the processing unit 606 directly outputs setting information to notify the user that no answer information of the second session information is matched in the case that no associated third application is found.

In the embodiments of the present application, an electronic device is provided. As shown in FIG. 17, FIG. 17 shows a block diagram of the structure of an electronic device 900 according to an embodiment of the present application. Wherein, the electronic device 900 comprises:
a memory 902, wherein the memory 902 stores programs or instructions; and
a processor 904, when the programs or instructions are executed by the processor 902, the steps of the session information processing method in any one of above embodiments are implemented.

The electronic device 900 provided by the embodiment of the present application comprises the memory 902 and the processor 904. When the programs or instructions in the memory 902 are executed by the processor 904, the steps of the session information processing method in any one of the above embodiments are implemented. Therefore, the electronic device 900 has all the beneficial effect of the session information processing method in any one of the above embodiments, which are not repeated herein.

In some embodiments, the memory 902 and the processor 904 can be connected via a bus or other means. The processor 904 can comprise one or more processing units, and the processor 904 can be a chip such as a Central Processing Unit (CPU), a Digital Signal Processor (DSP), an Application Specific Integrated Circuit (ASIC), or a Field Programmable Gate Array (FPGA).

In practical applications, the above electronic device 900 can specifically be a smart device with a data analyzing function such as a smartphone, a smart watch, a tablet computer, or a laptop computer, which is not specifically limited herein.

In an embodiment of the present application, a computer-readable storage medium is provided, in which programs or instructions are stored. When the programs or instructions are executed by a processor, the steps of the session information processing method in any one of the above embodiments are implemented.

The embodiment of the present application provides the computer-readable storage medium, when the programs or instructions stored in the computer-readable storage medium are executed by the processor, the steps of the session information processing method in any one of the above embodiments are implemented. Therefore, the computer-readable storage medium has all the beneficial effect of the session information processing method in any one of the above embodiments, which are not repeated herein.

In some embodiments, the above computer-readable storage medium can comprise any medium capable of storing or transmitting information. Examples of the computer-readable storage medium comprise an electronic circuit, a semiconductor memory device, a Read-Only Memory (ROM), a Random Access Memory (RAM), a Compact Disc Read-Only Memory (CD-ROM), a flash memory, an Erasable Read-Only Memory (EROM), a magnetic tape, a floppy disk, an optical disc, a hard disk, an optical fiber medium, a Radio Frequency (RF) link, an optical data storage device, and the like. Code segments can be downloaded via a computer network such as the Internet or an intranet.

In the description of the present application, the terms of "first" and "second" are used only for the purpose of description and shall not be understood to indicate or imply any relative importance, unless otherwise explicitly specified or defined. The terms of "connect", "mount", "fix" and the like should be understood in a broad sense, for example, the term "connect" can be a fixed connection, a detachable connection, or an integral connection; it can be a direct connection or an indirect connection through an intermediate medium. For those of ordinary skills in the art, they may understand the specific meanings of the above-mentioned terms in the present application according to specific circumstances.

In the description of the present application, the description of the terms of "an embodiment", "some embodiments", "specific embodiment" and the like is intended to mean that the specific features, structures, materials or characteristics described in combination with the embodiments or examples are comprised in at least one embodiment or example of the present application. In the description, the illustrative expression of the above terms may not indicate the same embodiment or example. In addition, the specific features, structures, materials or characteristics as described may be combined with each other in an appropriate method in one or more of any embodiments or examples.

In addition, the technical solutions between the various embodiments of the present application may be combined with each other, provided that such combination is implementable by a person of ordinary skill in the art. If the combination of technical solutions results in contradictions or impossibility of implementation, such a combination shall be deemed non-existent and shall not be within the scope of protection claimed by the present application.

The above-mentioned are merely some embodiments of the present application and are not intended to limit the present application, and for one skilled in the art, various modifications and changes may be made to the present application. Any modifications, equivalent substitutions, improvements and so on should be covered within the scope of protection of the present application.

## Claims

1. A session information processing method, wherein the session information processing method comprises:
receiving a first input from a user with respect to a target recipe interface;
in response to the first input, displaying a target interface, interface content of the target interface being associated with a target recipe;
receiving a second input from the user with respect to the target interface, the second input being configured to input target session information; and
in response to the second input, outputting target response information;
wherein the target response information is determined according to the target session information and a first database, and the first database is associated with the target recipe.

2. The session information processing method according to claim 1, wherein, the target response information comprises first answer information, and outputting the target response information comprises:
matching the target session information with the first database to obtain a first matching result;
outputting the first answer information in the case that the first matching result is a successful match;
matching the target session information with a second database to obtain a second matching result in the case that the first matching result is a failed match; and
outputting the target response information according to the second matching result;
wherein the second database is a general database.

3. The session information processing method according to claim 2, wherein, matching the target session information with the first database to obtain the first matching result comprises:
determining a target text based on the target session information;
matching and comparing the target text with multiple pieces of first information in the first database, wherein the first information is associated with the target recipe;
in the case that there is a successful match between the first information and the target text, determining that the first matching result is a successful match; and
in the case that the target text fails to match any of the first information, determining that the first matching result is a failed match.

4. The session information processing method according to claim 2 or 3, wherein, the target response information further comprises second answer information and setting information, and outputting the target response information based on the second matching result comprises:
outputting the second answer information in the case that the second matching result is a successful match; and
outputting the setting information in the case that the second matching result is a failed match, wherein the setting information indicates that the target session information does not have answer information.

5. The session information processing method according to any one of claims 1 to 4, wherein, after outputting the target response information, the session information processing method further comprises:
acquiring feedback information from the user on the target response information; and
updating database information of the first database according to the feedback information.

6. A session information processing apparatus, wherein, the session information processing apparatus comprises:
a receiving unit configured to receive a first input from a user with respect to a target recipe interface;
a display unit configured to display a target interface in response to the first input, wherein interface content of the target interface is associated with a target recipe;
the receiving unit is further configured to receive a second input from the user with respect to the target interface, and the second input is configured to input target session information;
a processing unit configured to output target response information in response to the second input;
wherein the target response information is determined based on the target session information and a first database, and the first database is associated with the target recipe.

7. The session information processing apparatus according to claim 6, wherein, the target response information comprises first answer information, and the processing unit is configured to:
match the target session information with the first database to obtain a first matching result;
output the first answer information in the case that the first matching result is a successful match;
match the target session information with a second database to obtain a second matching result in the case that the first matching result is a failed match; and
output the target response information according to the second matching result;
wherein the second database is a general database.

8. The session information processing apparatus according to claim 7, wherein, the processing unit is configured to:
determine a target text based on the target session information;
match and compare the target text with multiple pieces of first information in the first database, wherein the first information is associated with the target recipe;
determine that the first matching result is a successful match in the case that there is a successful match between the first information and the target text; and
determine that the first matching result is a failed match in the case that the target text fails to match any of the first information.

9. The session information processing apparatus according to claim 7 or claim 8, wherein, the target response information further comprises second answer information and setting information, and the processing unit is configured to:
output the second answer information in the case that the second matching result is a successful match;
output the setting information in the case that the second matching result is a failed match, wherein the setting information indicates that the target session information does not have answer information.

10. The session information processing apparatus according to any one of claims 6 to 9, wherein, the session information processing apparatus further comprises:
an acquiring unit configured to acquire feedback information from the user on the target response information; and
the processing unit is further configured to:
update database information of the first database according to the feedback information.

11. A session information processing method, wherein, the session information processing method comprises:
receiving a first input from a user with respect to a first interface, wherein the first interface is an application interface of a first application and the first input is configured to input first session information; and
displaying target content in response to the first input;
wherein the target content is first answer information or a second interface, the first answer information corresponds to the first session information and the second interface is an application interface of a second application associated with the first session information.

12. The session information processing method according to claim 11, wherein, displaying the target content comprises:
determining a target text based on the first session information;
parsing the target text and determining target intention according to a parsing result; and
displaying the target content based on the target intention.

13. The session information processing method according to claim 12, wherein, displaying the target content based on the target intention comprises:
matching the target intention with a first database, wherein the first database corresponds to the first application; and
displaying the target content according to a matching result.

14. The session information processing method according to claim 13, wherein, displaying the target content according to the matching result comprises:
displaying the first answer information in the case that the target intention is successfully matched with the first database; and
displaying the second interface in the case that the target intention fails to match the first database.

15. The session information processing method according to any one of claims 11 to 14, wherein, after displaying the target content, the session information processing method further comprises:
displaying target information in the second interface, wherein the target information is associated with the first session information; and/or
displaying second answer information in response to a second input from the user with respect to the second interface, wherein, the second input is configured to input second session information, the second answer information is determined based on a second database and the second session information, and the second database corresponds to the second application.

16. A session information processing apparatus, wherein, the session information processing apparatus comprises:
a receiving unit configured to receive a first input from a user with respect to a first interface, wherein the first interface is an application interface of a first application and the first input is configured to input first session information; and
a display unit configured to display target content in response to the first input;
wherein the target content is first answer information or a second interface, the first answer information corresponds to the first session information and the second interface is an application interface of a second application associated with the first session information.

17. The session information processing apparatus according to claim 16, wherein, the session information processing apparatus further comprises:
a processing unit configured to: determine a target text according to the first session information,
parse the target text, and determine target intention according to a parsing result; and
the display unit is configured to:
display the target content according to the target intention.

18. The session information processing apparatus according to claim 17, wherein, the processing unit is configured to:
match the target intention with a first database, wherein the first database corresponds to the first application; and
the display unit is configured to:
display the target content according to a matching result.

19. The session information processing apparatus according to claim 18, wherein, the display unit is configured to:
display the first answer information in the case that the target intention is successfully matched with the first database; and
display the second interface in the case that the target intention fails to match the first database.

20. The session information processing apparatus according to any one of claims 16 to 19, wherein, after displaying the target content, the display unit is further configured to:
display target information in the second interface, wherein the target information is associated with the first session information; and/or
display second answer information in response to a second input from the user with respect to the second interface, wherein, the second input is configured to input second session information, the second answer information is determined based on a second database and the second session information, and the second database corresponds to the second application.

21. An electronic device, comprising a processor and a memory, wherein, the memory stores a program or an instruction configured to be executed on the processor; when the program or instruction is executed by the processor, steps of a session information processing method in any one of claims 1 to 5 are implemented; or, when the program or instruction is executed by the processor, steps of a session information processing method in any one of claims 11 to 15 are implemented.

22. A computer-readable storage medium, wherein a program or an instruction is stored in the computer-readable storage medium; when the program or instruction is executed by a processor, steps of a session information processing method in any one of claims 1 to 5 are implemented; or, when the program or instruction is executed by the processor, steps of a session information processing method in any one of the claims 11 to 15 are implemented.
